(19) Europäisches Patentamt / European Patent Office / Office européen des brevets

(11) **EP 1 444 308 B1**

(12) **EUROPEAN PATENT SPECIFICATION**

| | |
|---|---|
| (45) Date of publication and mention of the grant of the patent: **12.01.2011 Bulletin 2011/02** | (51) Int Cl.: **C09K 3/14** (2006.01)  **C01F 17/00** (2006.01) **B24B 37/00** (2006.01)  **H01L 21/304** (2006.01) |
| (21) Application number: **02785937.0** | (86) International application number: **PCT/JP2002/011925** |
| (22) Date of filing: **15.11.2002** | (87) International publication number: **WO 2003/042321 (22.05.2003 Gazette 2003/21)** |

(54) **CERIUM-BASED POLISH AND CERIUM-BASED POLISH SLURRY**

CERBASIERENDES POLIERMITTEL UND CERBASIERENDE POLIERSUSPENSION

PRODUIT A POLIR A BASE DE CERIUM ET BOUE DE POLISSAGE A BASE DE CERIUM

(84) Designated Contracting States:
AT BE BG CH CY CZ DE DK EE ES FI FR GB GR IE IT LI LU MC NL PT SE SK TR

(30) Priority: **16.11.2001 JP 2001350968**
**20.11.2001 US 331614 P**

(43) Date of publication of application:
**11.08.2004 Bulletin 2004/33**

(73) Proprietor: **Showa Denko K.K.**
**Tokyo 105-8518 (JP)**

(72) Inventor: **Bessho, Naoki,**
**c/o Tohoku Kinzoku Kagaku K.K.**
**Iwaki-shi,**
**Fukushima 970-8021 (JP)**

(74) Representative: **Strehl Schübel-Hopf & Partner**
**Maximilianstrasse 54**
**80538 München (DE)**

(56) References cited:
EP-A- 0 875 547     EP-A- 0 939 431
EP-A1- 1 043 379     WO-A1-00/73211
JP-A- 2001 031 951

**Description**

Cross Reference to Related Applications:

This application is an application filed under 35 U.S.C. § 111(a) claiming the benefit pursuant to 35 U.S.C. § 119(e)(1) of the filing date of Provisional Application Serial No. 60/331, 614 filed November 20, 2001 pursuant to 35 U.S.C. §111(b).

Technical Field:

The present invention relates to a cerium-based polish for polishing glass and more particularly, to a cerium-based polish and to a cerium-based slurry that contains cerium oxide as a principal component and is used to finish relatively hard glass substrate, such as those used in hard disks or in liquid crystal display panels, or Pyrex glass.

Background Art:

Glass materials are now used in a variety of applications and in many cases, they require surface polishing. For example, glass substrates for use as optical lenses, as well as optical lenses, require a high surface precision to provide a mirror surface. In particular, glass substrates used in optical disks and magnetic disks, as well as those used in liquid crystal displays such as thin-film transistor (TFT) LCDs and twisted-nematic (TN) LCDs and those used in color filters used in liquid crystal televisions and LSI photomasks, require a high flatness and a small surface roughness and should be defect-free. For these reasons, the surfaces of these substrates must be polished to a higher precision.

Glass substrates for LCDs need to have a high heat resistance since they are subjected to high temperature during the post-treatment. Also, substrates with a smaller thickness are demanded for producing lightweight LCDs. The glass substrates for magnetic disks also must meet many requirements such as small thickness for producing lightweight products and mechanical properties, in particular rigidity, to counteract distortion of the disk during high-speed operation. These requirements are becoming increasingly strict every year.

Many improvements have been made to the chemical composition and to the manufacturing processes of the glass material in order to realize thin substrates with sufficient mechanical properties, and as a result, glass substrates containing aluminosilicate as a principle component have been developed and are now widely in use in LCDs and magnetic disks. As for the glass substrates for magnetic disks, crystalline glass substrates containing lithium silicate as a principle component have been developed, as have those using crystalline quarts or the like. Having a poor workability, these glass substrates can be polished by conventional polishes only at low speeds and their productivity remains low. Also, in the case of the glass substrates for use in a magnetic disk, the substrates must be capable of being polished with a high precision and at a high speed.

Polish containing as a principle component a rare earth oxide, in particular, cerium oxide, are widely used to polish surfaces of glass substrates since these polishes can polish the substrate several times faster than those containing iron oxide, zirconium oxide or silicon dioxide. These polishs are typically put to use by dispersing polish particles in a liquid such as water. The cerium oxide-based polish have a drawback that they can polish hard glass substrates, such as those described above, only at low speeds.

Although the precise mechanism by which a cerium oxide-based polish polishes the glass substrate has yet to be fully understood, it has been observed empirically that the polishing is effected as a result of combined effects of chemical effects of cerium oxide against glass and mechanical effects provided by the hardness of cerium oxide particles. However, glass substrates and crystalline glass substrates, containing aluminosilicate and lithium silicate as their respective principle components, are hardly reactive to chemicals and are thus less susceptible to the chemical effects of the polish. In addition, the hard glass substrate (work) easily breaks or crushes the polish particles and it is therefore difficult to maintain the mechanical effects of the polish against glass. As a result, the work speed is quickly decreased.

In order to maintain the mechanical effects over a prolonged period of time, particles of alumina, zirconia, or other materials that are harder than the work may be added to the polish composition. This, however, reduces the relative concentration of the cerium oxide particles, and as a result, chemical effects of cerium oxide become insufficient. Furthermore, the hard particles may cause defects such as pits and scratches on the glass surfaces (surfaces of work).

EP 0 875 547 discloses a polish for polishing substrates containing cerium oxide particles having a crystallite size of 15-60 nm and a specific surface area of 9-55 m2/g.

The present invention has been devised to address the above-described drawbacks of the prior art. Accordingly, it is an objective of the present invention to provide a ceriuni-based polish that is particularly hard and is capable not only of achieving improved surface qualities after polishing, but also of maintaining the initial polishing speed for a prolonged period of time when used to polish hard glass materials that are otherwise difficult to polish at high speeds. The polish inflicts substantially no surface defects such as pits and scratches on works such as glass substrates. Another objective of the present invention is to provide a cerium-based slurry containing the cerium-based polish.

Disclosure of the Invention:

A cerium-based polish containing cerium oxide as a principle component according to the present invention, **characterized in that** the polish, when dispersed in water in an amount of 10% by mass, has a precipitate bulk specific density in the range of 0.8g/ml to 1.0g/ml,
having a primary particle size in the range of 40nm to 80nm and a specific surface area in the range of $2m^2/g$ to $5m^2/g$.
The cerium-based polish according the present invention, characterized by containing Ce in an amount of 35% by mass or more as measured in the amount of cerium oxide.
A cerium-based polish slurry formed by dispersing in a dispersion medium the cerium-based polish to a concentration in the range of 5% to 30% by mass.
The cerium-based polish slurry, **characterized in that** the dispersion medium is water or an organic solvent, and the organic solvent is at least one selected from the group consisting of alcohols, polyols, acetones, and tetrahydrofurans.
The cerium-based polish slurry, characterized by containing a surfactant and the surfactant is at least one selected from the group consisting of anionic surfactants and nonionic surfactants.
The cerium-based polish slurry, **characterized in that** the anionic surfactant is at least one selected from the group consisting of low-molecular weight or high-molecular weight carboxylates, sulfonates, sulfates, and phosphates, and the nonionic surfactant is at least one selected from the group consisting of polyoxyethylene alkylphenol ether, polyoxyethylene alkyl ether, and polyoxyethylene fatty acid ester.
The present invention further comprises a method for polishing a glass substrate using the cerium-based polish slurry and a glass substrate polished by the method.
As set forth, the polish, when dispersed in water in an amount of 10% by mass, has a precipitate bulk specific density in the range of 0.8g/ml to 1.0/ml, having a primary particle size in the range of 40nm to 80nm and a specific surface area in the range of $2m^2/g$ to $5m^2/g$, enables to provide the cerium-based polish and the cerium-based polish slurry that increase the polishing speed and cause few scratches inflicted on the surface of polish and achieve high quality of the polished surfaces.

Best Mode for carrying out the Invention:

The cerium-based polish as used herein refers to a polish containing cerium oxide as its principle component and may contain substances other than cerium oxide, such as La, Nd, Pr or oxides thereof.
The precipitate bulk specific density as used herein refers to the specific density of the polish when the polish free of additives such as a dispersant is dispersed in a liquid and is allowed to precipitate. The precipitate bulk specific density is measured in the following manner.
10g of the polish is dispersed in ion-exchange water. The dispersion solution is poured in a 100ml graduated cylinder until the bottom of the meniscus is at the 100ml line. The dispersion solution is thoroughly stirred and is then allowed to stand for 24 hours. The volume of the powder precipitate layer is then measured. Using the obtained volume of the precipitate, the precipitate bulk specific density is determined by the following equation.

$$\text{Precipitate bulk specific density (g/ml)}$$

$$= 10(g)/\text{volume of the precipitate (ml)}$$

In the present invention, the precipitate bulk specific density of the cerium-based polish should be in the range of 0.8g/ml to 1.0g/ml. If the cerium-based polish has the precipitate bulk specific density of less than 0.8g/ml, then the speed at which the less-workable, hard glass can be polished using the polish becomes too low to achieve the above-described objective of the present invention. Conversely, the cerium-based polish with the precipitate bulk specific density of greater than 1.0g/ml makes surfaces susceptible to scratching upon polishing, and the objective of the present invention cannot be achieved in this case either.
Preferably, the precipitate bulk specific density of the polish of the present invention is in the range of 0.85g/ml to 0.95g/ml. In this manner, performances of the polish are further enhanced.
When polish is manufactured in such manner that slurry grounded from bastnaesite is dried, baked and crushed, the precipitate bulk specific density of the polish may be controlled by baking temperatures. Assuming that the particle size of grind is almost the same, the higher the baking temperatures, the precipitate bulk specific density increases; and the lower the baking temperatures, the precipitate bulk specific density decreases.

The cerium-based polish in accordance with the present invention has a primary particle size in the range of 40nm to 80nm, more preferably in the range of 50nm to 70nm.

The primary particle size of the cerium-based polish of the present invention is calculated from the full-width at the half-maximum of the peaks of X-ray diffraction using the following equation (Scherrer's equation):

$$\varepsilon = 0.9\lambda/\beta_{1/2}/\cos\theta$$

where

$\varepsilon$ = primary particle size
$\lambda$ = measured X-ray wavelength (in angstrom)
$\beta_{1/2}$ = full-width at the half-maximum of X-ray diffraction peak (in radian).

The X-ray diffraction peaks used to determine the primary particle size of the cerium-based polish of the present invention are those indicative of cerium oxide and appearing in the vicinity of $2\theta=28$ to $28.4°$.

If the cerium-based polish of the present invention has a primary particle size of less than 40nm, then the mechanical polishing performance of the polish is reduced, resulting in an insufficient polishing speed. Conversely, if the cerium-based polish of the present invention has a primary particle size of greater than 80nm, then the polish particles tend to become hard large crystals, which can inflict scratches on surfaces upon polishing.

The cerium-based polish of the present invention has a specific surface area in the range of $2m^2/g$ to $5m^2/g$. The specific surface area less than $2m^2/g$ makes the surfaces susceptible to scratching upon polishing, whereas the specific surface area greater than $5m^2/g$ results in a reduced polishing speed. Preferably, the specific surface area of the cerium-based polish of the present invention is measured using the BET technique.

The cerium-based polish in accordance with the present invention contains cerium oxide as a principle component. By saying "the polish contains cerium oxide as a principle component," it is meant that the polish contains Ce in an amount of 35% or more by mass, preferably in an amount of 45% or more by mass as measured in the amount of cerium oxide. If the amount of Ce as measured in the amount of cerium oxide is smaller than 35% by mass, then sufficient polishing speed is hardly achieved. Although a larger amount of Ce as measured in the amount of cerium oxide is preferred, the amount of cerium oxide exceeding 70% by mass does not correspondingly improve the performance of the polish. It is therefore preferred in practice that the amount of Ce contained in the cerium-based polish of the present invention is in the range of 35% to 70% by mass as measured in the amount of cerium oxide.

The cerium-based polish of the present invention is generally handled in the form of a powder and is preferably put to use in the form of a dispersion (slurry) for the purpose of finishing various glass materials and glass products, including glass substrates for use as optical lenses, optical and magnetic disks, and LCDs.

For example, when dispersed in a dispersion medium such as water, the polish is used in the form of a slurry containing the polish preferably at a concentration of 5 to 30% by mass, more preferably at a concentration of 10 to 20% by mass. Aside from water, the dispersion medium suitable for use in the present invention includes organic solvents, in particular, water-soluble organic solvents.

Examples of the water-soluble organic solvent include monohydric alcohols having 1 to 10 carbon atoms, such as methanol, ethanol, propanol, isopropanol, and butanol, polyols having 3 to 10 carbon atoms, such as ethylene glycol and glycerol, acetone, dimethyl sulfoxide (DMSO), dimethyl formamide (DMF), tetrahydrofuran, and dioxane. Of these, alcohols, polyols, acetones, and tetrahydrofurans are particularly preferred.

In the present invention, a surfactant is preferably added to the slurry of the cerium-based polish to serve as a dispersant. The surfactant suitable for use in the present invention may be any of anionic surfactants, cationic surfactants, nonionic surfactants, and amphoteric surfactants. These surfactants may be used either independently or as a mixture of two or more. Of these, anionic surfactants and nonionic surfactants are particularly suitable for use in the present invention.

The anionic surfactant is selected from known carboxylates (e.g., soaps, salts of N-acyl amino acids, alkyl ether carboxylate, and acylated peptides), sulfonates (e.g., alkane sulfonates (including alkylbenzene sulfonates), alkyl naphthalene sulfonates, sulfosuccinates, $\alpha$-olefin sulfonates, and N-acyl sulfonates), sulfates (e.g., oil sulfate, alkyl sulfates, alkyl ether sulfates, alkyl allyl ether sulfates, and alkyl amide sulfates), phosphates (e.g., alkyl phosphates, alkyl ether phosphates, alkyl allyl ether phosphates). The anionic surfactant includes both low and high molecular weight compounds. The salt as used herein is at least one selected from salts formed with Li, Na, K, Rb, Cs, ammonium and H.

Examples of the soap include salts of C12 to C18 fatty acids, typical examples thereof being lauric acid, myristic acid, palmitic acid, and stearic acid. Examples of the salt of N-acyl amino acids include salts of N-acyl-N-methylglycine and N-acyl glutamate, each having 12 to 18 carbon atoms. The alkyl ether carboxylate includes those with 6 to 18 carbon atoms, while the acylated peptide includes those with 12 to 18 carbon atoms.

The sulfonate includes those having 6 to 18 carbon atoms. For example, the alkane sulfonate includes laurylsulfonate, dioctylsuccinesulfonate, benzenesulfonate, dodecylbenzenesulfonate, myristylsulfonate, allylbenzene sulfonate, and stearylsulfonate. The sulfate includes those with 6 to 18 carbon atoms, for example, salts of alkyl sulfuric acids such as laurylsulfate, dioctylsuccinesulfate, myristylsulfate, and stearylsulfate. The phosphate includes those with 8 to 18 carbon atoms. Examples of the nonionic surfactant include polyoxyethylene alkylphenol ether, polyoxyethylene alkyl ether, and polyoxyethylene fatty acid ester. Further, aside from the aforementioned anionic surfactants and nonionic surfactants, any of known fluorine-containing surfactants may also be used.

Examples of the high-molecular weight surfactant include special poly(carboxylic acid) compound (Product name: Poiz 530, manufactured by KAO Corp.).

In addition to the above-described surfactant, the slurry of the cerium-based polish in accordance with the present invention may optionally contain additives such as polymer dispersants including tripolyphosphate, phosphates including hexametaphosphate, cellulose ethers including methylcellulose and carboxymethylcellulose, and water-soluble polymers including polyvinyl alcohol. In general, the amount of the additive is preferably in the range of 0.05 to 20% by mass, more preferably in the range of 0.1 to 10% by mass with respect to the amount of the polish.

The cerium-based polish of the present invention and the slurry of the cerium-based polish can polish glass substrates or the like without inflicting pits, scratches or other surface defects and can thus provide high-quality polished surfaces. It also permits high-speed polishing that lasts for a prolonged period of time.

While the cerium-based polish of the present invention can be produced by using any of known processes and production apparatuses, it can be produced in a particularly efficient manner according to the following production conditions.

Bastnaesite or other cerium oxide-rich materials are used as a material. The material is ground into particles in such a manner that the size of the particles are controlled within the range of $1.6\mu m$ to $2.0\mu m$ as measured by a 30pm aperture tube on a Coulter multisizer. The material is preferably baked at a temperature of 1000°C to 1100°C and for about 2 hours when a rotary kiln is used.

While the present invention is described in detail in the following with reference to examples, these examples are not intended to limit the scope of the invention in any way.

Example 1:

Bastnaesite #4010 manufactured by Molycorp, Inc. (USA) was used as a material. 1kg of the material was ground with 1 liter of water in a ball mill to a powder with the average particle size (D50) of 1.8pm, and the powder was formed into a slurry.

The composition of Bastnaesite #4010 manufactured by Molycorp, Inc. (USA) was as follows:

| | |
|---|---|
| $CeO_2$ | 35% by mass |
| $La_2O_3$ | 24% by mass |
| $Nd_2O_3$ | 8% by mass |
| $Pr_6O_{11}$ | 3% by mass |
| F | 6% by mass |
| Total of rare earth oxides | 68 to 73% by mass |
| Soaking loss (1000°C) | 20% by mass |

The slurry was dried, baked at 1000°C using an electric furnace for 2 hours, allowed to cool, crushed, and sorted by size to obtain a cerium-based polish of the present invention. The cerium-based polish so obtained contained 45% by mass of cerium as measured in the amount of cerium oxide.

The average particle size (D50) corresponds to the 50th percentile of the volume distribution of the polish particles as measured by a $30\mu m$ aperture tube on a Coulter multisizer (manufactured by Beckman Coulter, Inc.).

The resulting cerium-based polish was dispersed in water to form a polish slurry with the concentration of the polish of 10% by mass. This polish slurry was used to polish non-alkali glass pieces intended for use in thin-film transistor (TFT) panels, and how well each glass piece was polished was evaluated. Conditions for polishing were as follows:

(Conditions for polishing)

| | |
|---|---|
| Polishing machine: | 4-way type double-side polisher |
| Work: | 5x5cm pieces of non-alkali glass, with the surface area of $25cm^2$ each. |
| Number of pieces to be polished: | 3 pieces/batch x 2 times |
| Pads used for polishing: | polyurethane foam pads (LP-77, manufactured by Rhodes) |
| Rotation rate of the bottom plate: | 90rpm |
| Slurry feed rate: | 60ml/min |
| Processing pressure: | $156g/cm^2$ |
| Duration of polishing: | 30min |

Using a micrometer, the thickness of each of the 6 pieces of non-alkali glass for use in TFT panels was measured at four different points, and an average was taken for 4 points x 6 pieces to determine the polishing speed ($\mu$m/min). Also, by using a halogen lump (200,000lux) as a light source, the glass surfaces were visually observed and the number of scratches was counted for each surface. Further, by using Talystep available from Taylor Hobson, Ltd., each glass piece was measured for the center-line average roughness of the glass surface.

Meanwhile, 10g of the cerium-based polish was dispersed in ion-exchange water. The dispersion solution was poured in a 100ml graduated cylinder until the bottom of the meniscus was at the 100ml line. The dispersion solution was thoroughly stirred and was then allowed to stand for 24 hours. The volume of the powder precipitate layer was then measured and the precipitate bulk specific density was determined.

The results are shown in Table 1 along with the properties, the average particle size of the polish (D50), the specific surface area determined by BET technique, the polishing speed, and the precipitate bulk specific density.

Example 2:

A cerium-based polish was obtained in the same manner as in Example 1, except that the material was wet-ground to an average particle size of 1.6$\mu$m.

In the same manner as in Example 1, the resulting cerium-based polish was used to polish the glass pieces, and how well each glass piece was polished was evaluated. The results are shown in Table 1.

Comparative Example 1:

A cerium-based polish was obtained in the same manner as in Example 1, except that the slurry was baked in the electric furnace at a temperature of 800°C.

In the same manner as in Example 1, the resulting cerium-based polish was used to polish the glass pieces, and how well each glass piece was polished was evaluated. Table 1 shows the properties of the polish and Table 2 shows results of polishing.

Comparative Example 2:

A cerium-based polish was obtained in the same manner as in Example 1, except that the slurry was baked in the electric furnace at a temperature of 1200°C.

In the same manner as in Example 1, the resulting cerium-based polish was used to polish the glass pieces, and how well each glass piece was polished was evaluated. Table 1 shows the properties of the polish and Table 2 shows results of polishing.

As can be seen from Table 2, a high polishing speed was achieved and no scratch was formed on the surfaces of the non-alkali glass pieces serving as a work in Examples 1 and 2. Accordingly, each of the cerium-oxide polishes of Examples 1 and 2 has proven to be effective in providing high-quality polished surfaces.

In contrast, the polishing speed was low in Comparative Example 1 due to the small precipitate bulk specific density of the polish.

Conversely, the excessive precipitate bulk specific density resulted in a reduced polishing speed in Comparative Example 2. Furthermore, scratches were formed on the polished surfaces and the surface roughness was unfavorably large, resulting in low-quality polished surfaces.

Also, the cerium-based polish slurry of the present invention exhibited its polishing effect over a prolonged period of time.

Table 1

| | Polish properties | | | |
|---|---|---|---|---|
| | Average particle size (pm) | Precipitate bulk specific density(g/ml) | Primary particle size (nm) | Specific surface area (m$^2$/g) |
| Ex.1 | 1.86 | 0. 87 | 60 | 2.8 |
| Ex.2 | 1.55 | 0. 91 | 70 | 2.3 |
| Comp. Ex.1 | 1.78 | 0. 75 | 30 | 5.5 |
| Coup. Ex.2 | 2.19 | 1.05 | 110 | 1.6 |

Table 2

| | Polishing performances | | | | | |
| | 30 minutes after polishing is started | | | 240 minutes after polishing is started | | |
| | Polishing speed (μm/min) | Number of scratches (per one surface) | Surface roughness Ra (angstrom) | Polishing speed (μm/min) | Number of scratches (per one surface) | Surface roughness Ra (angstrom) |
|---|---|---|---|---|---|---|
| Ex.1 | 2.35 | 0.17 | 12 | 2.28 | 0.08 | 11 |
| Ex.2 | 2.29 | 0.08 | 10 | 2.06 | 0.17 | 9 |
| Comp. Ex.1 1 | 1.99 | 0.08 | 9 | 1.18 | 0.08 | 8 |
| Comp. Ex.2 | 1.69 | 1.50 | 15 | 0.94 | 1.08 | 13 |

Industrial Applicability:

As set forth, the use of the cerium-based polish in accordance with the present invention increased the polishing speed. Also, the polished works had few scratches inflicted on their surfaces and achieved a small surface roughness. As a result, high quality of the polished surfaces was ensured. Furthermore, the cerium-based polish of the present invention can provide a high polishing speed that lasts for a prolonged period of time, thereby increasing the efficiency of polishing.

**Claims**

1. A cerium-based polish containing cerium oxide as a principle component, **characterized in that** the polish, when dispersed in water in an amount of 10% by mass, has a precipitate bulk specific density in the range of 0.8g/ml to 1.0g/m, **characterized by** having a primary particle size in the range of 40nm to 80nm, and **characterized by** having a specific surface area in the range of $2m^2/g$ to $5m^2/g$.

2. The cerium-based polish according to claim 1, **characterized by** containing Ce in an amount of 35% by mass or more as measured in the amount of cerium oxide.

3. A cerium-based polish slurry formed by dispersing in a dispersion medium the cerium-based polish according to claim 1 or 2 to a concentration in the range of 5% to 30% by mass.

4. The cerium-based polish slurry according to 3, **characterized in that** the dispersion medium is water.

5. The cerium-based polish slurry according to 3, **characterized in that** the dispersion medium is an organic solvent.

6. The cerium-based polish slurry according to claim 5, **characterized in that** the organic solvent comprises at least one selected from the group consisting of alcohols, polyols, acetones, and tetrahydrofurans.

7. The cerium-based polish slurry according to any one of claims 3 to 6, **characterized by** containing a surfactant.

8. The cerium-based polish slurry according to claim 7 **characterized in that** the surfactant is at least one selected from the group consisting of anionic surfactants and nonionic surfactants.

9. The cerium-based polish slurry according to claim 8 **characterized in that** the anionic surfactant is at least one selected from the group consisting of low-molecular weight or high-molecular weight carboxylates, sulfonates, sulfates, and phosphates.

10. The cerium-based polish slurry according to claim 8 **characterized in that** the nonionic surfactant is at least one selected from the group consisting of polyoxyethylene alkylphenol ether, polyoxyethylene alkyl ether, and polyoxyethylene fatty acid ester.

11. A method for polishing a glass substrate using the cerium-based polish slurry according to any one of claims 3 to 10.

12. A process for manufacturing a glass substrate including a step of using the method for polishing a glass substrate according to claim 11.

**Patentansprüche**

1. Poliermittel auf Basis von Cer, welches Ceroxid als Hauptbestandteil enthält, **dadurch gekennzeichnet, dass** das Poliermittel, wenn es in Wasser in einer Menge von 10 Massen- % dispergiert wird, eine spezifische Niederschlagsschüttdichte im Bereich von 0.8 g/ml bis 1,0 g/ml aufweist, **dadurch gekennzeichnet, dass** es eine primäre Teilchengröße im Bereich von 40 nm bis 80 nm aufweist, und **dadurch gekennzeichnet, dass** es eine spezifische Oberfläche im Bereich von $2 m^2/g$ bis $5 m^2/g$ aufweist.

2. Poliermittel auf Basis von Cer nach Anspruch 1, **dadurch gekennzeichnet, dass** es Cer in einer Menge von 35 Massen-% oder mehr, gemessen als Menge von Ceroxid, enthält.

3. Poliermittelaufschlämmung auf Basis von Cer, gebildet durch Dispergieren des Poliermittels auf Basis von Cer nach Anspruch 1 oder 2 in einem Dispergiermedium in einer Konzentration im Bereich von 5 bis 30 Massen-%.

4. Poliermittelaufschlämmung auf Basis von Cer nach Anspruch 3, **dadurch gekennzeichnet, dass** das Dispergiermittel Wasser ist.

5. Poliermittelaufschlämmung auf Basis von Cer nach Anspruch 3, **dadurch gekennzeichnet, dass** das Dispergiermedium ein organisches Lösungsmittel ist.

6. Poliermittelaufschlämmung auf Basis von Cer nach Anspruch 5, **dadurch gekennzeichnet, dass** das organische Lösungsmittel mindestens eine der Gruppen enthält, die aus der aus Alkoholen, Polyolen, Acetonen und Tetrahydrofuranen bestehenden Gruppe ausgewählt ist.

7. Poliermittelaufschlämmung auf Basis von Cer nach einem der Ansprüche 3 bis 6, **dadurch gekennzeichnet, dass** es ein oberflächenaktives Mittel enthält.

8. Poliermittelaufschlämmung auf Basis von Cer nach Anspruch 7, **dadurch gekennzeichnet, dass** das oberflächenaktive Mittel mindestens ein Mittel ist, das aus der Gruppe ausgewählt ist, die aus anionischen oberflächenaktiven Mitteln und nicht-ionischen oberflächenaktiven Mittels besteht.

9. Poliermittelaufschlämmung auf Basis von Cer nach Anspruch 8, **dadurch gekennzeichnet, dass** das anionische oberflächenaktive Mittel mindestens ein Mittel ist, das aus der Gruppe ausgewählt ist, die aus niedermolekularen oder hochmolekularen Carboxylaten, Sulfonaten, Sulfaten und Phosphaten besteht.

10. Poliermittelaufschlämmung auf Basis von Cer nach Anspruch 8, **dadurch gekennzeichnet, dass** das nicht ionische oberflächenaktive Mittel mindestens ein Mittel ist, das aus der Gruppe ausgewählt ist, die aus Polyolxyethylenalkylphenolether, Polyoxyethylenalkylether und Polyoxyethylenfettsäureester besteht.

11. Verfahren zum Polieren eines Glassubstrats unter Verwendung der Poliermittelausschlämmung auf Basis von Cer nach einem der Ansprüche 3 bis 10.

12. Verfahren zum Herstellen eines Glassubstrats, welches eine Stufe umfasst, in der das Verfahren zum Polieren eines Glassubstrats nach Anspruch 11 eingesetzt wird.

**Revendications**

1. Matière à polir à base de cérium contenant de l'oxyde de cérium comme constituant principal, **caractérisée en ce que** la matière à polir, lorsqu'elle est dispersée dans de l'eau dans une quantité de 10 % en masse, présente une masse volumique apparente de précipité dans l'intervalle de 0,8 g/ml à 1,0 g/ml, et
**caractérisée en ce qu'**elle présente une taille de particules primaires dans l'intervalle de 40 nm à 80 nm, et
**caractérisée en ce qu'**elle présente une surface spécifique dans l'intervalle de 2 $m^2$/g à 5 $m^2$/g.

2. Matière à polir à base de cérium selon la revendication 1, **caractérisée en ce qu'**elle contient Ce dans une quantité de 35 % en masse ou supérieure comme mesurée dans la quantité d'oxyde de cérium.

3. Suspension de matière à polir à base de cérium formée par dispersion dans un milieu de dispersion de la matière à polir à base de cérium selon la revendication 1 ou 2 dans une concentration dans l'intervalle de 5 % à 30 % en masse.

4. Suspension de matière à polir à base de cérium selon la revendication 3, **caractérisée en ce que** le milieu de dispersion est l'eau.

5. Suspension de matière à polir à base de cérium selon la revendication 3, **caractérisée en ce que** le milieu de dispersion est un solvant organique.

6. Suspension de matière à polir à base de cérium selon la revendication 5, **caractérisée en ce que** le solvant organique comprend au moins un solvant choisi dans le groupe constitué d'alcools, de polyols, d'acétones et de tétrahydrofuranes.

**7.** Suspension de matière à polir à base de cérium selon l'une quelconque des revendications 3 à 6, **caractérisée en ce qu'**elle contient un tensioactif.

**8.** Suspension de matière à polir à base de cérium selon la revendication 7, **caractérisée en ce que** le tensioactif est au moins un tensioactif choisi dans le groupe constitué de tensioactifs anioniques et de tensioactifs non ioniques.

**9.** Suspension de matière à polir à base de cérium selon la revendication 8, **caractérisée en ce que** le tensioactif anionique est au moins un tensioactif choisi dans le groupe constitué de carboxylates, de sulfonates, de sulfates et de phosphates de faible poids moléculaire ou de poids moléculaire élevé.

**10.** Suspension de matière à polir à base de cérium selon la revendication 8, **caractérisée en ce que** le tensioactif non ionique est au moins un tensioactif choisi dans le groupe constitué d'alkylphénoléther de polyoxyéthylène, d'alkyléther de polyoxyéthylène et d'ester d'acide gras de polyoxyéthylène.

**11.** Procédé de polissage d'un substrat en verre utilisant la suspension de matière à polir à base de cérium selon l'une quelconque des revendications 3 à 10.

**12.** Procédé de fabrication d'un substrat en verre comprenant une étape d'utilisation du procédé de polissage d'un substrat en verre selon la revendication 11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60331614 B
- EP 0875547 A